Europäisches Patentamt

European Patent Office

Office européen des brevets

(19)

(11) Veröffentlichungsnummer: **0 575 893 A1**

(12) ## EUROPÄISCHE PATENTANMELDUNG

(21) Anmeldenummer: **93109703.4**

(22) Anmeldetag: **17.06.93**

(51) Int. Cl.5: **G06K 7/14**, G06K 7/10

(30) Priorität: **23.06.92 DE 4220484**

(43) Veröffentlichungstag der Anmeldung:
**29.12.93 Patentblatt 93/52**

(84) Benannte Vertragsstaaten:
**AT BE CH DE DK ES FR GB GR IE IT LI LU MC NL PT SE**

(71) Anmelder: **WARNER MUSIC MANUFACTURING EUROPE GmbH**
**Postfach 40 14,**
**Max-Planck-Strasse 1-9**
**D-5110 Alsdorf(DE)**

(72) Erfinder: **Seehausen, Gerhard, Dr.**
**Kreuzerdriesch 33**
**D-5100 Aachen(DE)**
Erfinder: **Kämper, Martin, Dipl.-Ing.**
**Rochusstrasse 44**
**D-5100 Aachen(DE)**
Erfinder: **Lubberich, Dieter**
**Löwenstrasse 1**
**D-5176 Inden(DE)**

(74) Vertreter: **Klunker . Schmitt-Nilson . Hirsch**
**Winzererstrasse 106**
**D-80797 München (DE)**

(54) **Vorrichtung zum Lesen von Strichcodes.**

(57) Auf optischen Speicherplatten sind Strichcodes aufgezeichnet, die unter anderem zur Produktionsüberwachung dienen. Die Striche bzw. Felder des Strichcodes sind ebenso wie die Datenaufzeichnungsspuren durch dünne linienförmige Ausnehmungen in der Oberfläche der Speicherplatte ausgebildet. Aufgrund des geringen Kontrastes können diese Strichcode nicht mit den üblichen Scannerpistolen erfasst werden. Kamerasysteme sind aufwendig. Die Erfindung schafft eine kostengünstige Lesevorrichtung mit einer Abtast-Optik (300, 301, 311),die relativ zu dem ringförmig angeordneten Strichcode (310) geführt wird. Über ein Objektiv (307) wird der Lichtstrahl mit einer Halbwertbreite über dem Strichcode erzeugt, welche in der Größenordnung der Abmessungen der einzelnen Strichcode-Felder liegt. Die Gitterstruktur erzeugt Beugungs- und Streulicht, welches allein oder zusammen mit dem direkt reflektierten Lichtstrahl auf einen Lichtdetektor (704) gelangt und für einen signifikanten Intensitätssprung zwischen Feldern und Zwischenräumen des Strichcodes sorgt.

Fig. 1

EP 0 575 893 A1

Die Erfindung betrifft eine Vorrichtung zum Lesen von auf optischen Speichern befindlichen Strichcodes, mit einer optischen Abtasteinrichtung, wobei die Strichcodes unterschiedlich lange Strichfelder konstanter Breite aufweisen, die sich jeweils aus einer Vielzahl dünner Längslinien zusammensetzen, wozu die Strichcodes mittels lasertechnischer Verfahren auf die optischen Speicher aufgezeichnet wurden, und insbesondere die Strichfelder sich aus paralell bzw. konzentrischen Spurelementen zusammensetzen, die jeweils eine in Grenzen konstante Breite und konstanten Abstand voneinander aufweisen.

Strichcodes, häufig auch als Barcodes bezeichnet, sind in verschiedenen Formen für verschiedenste Zwecke bekannt. Beispielsweise finden sich Strichcodes auf fast sämtlichen Handelsartikeln bzw. deren Verpackung. Mit sogenannten Scanner-Kassen werden diese Strichcodes mittels Laserstrahl abgetastet und das von dem jeweiligen Strichcode reflektierte Licht ist in seiner Amplitude entsprechend dem Hell/Dunkel-Kontrast moduliert und kann von einer Auswerteelektronik ausgewertet werden.

Zum Lesen solcher Strichcodes werden üblicherweise sogenannte Laserstifte oder Scannerpistolen eingesetzt. Diese Geräte beinhalten eine oder mehrere Leuchtdioden oder Laserdioden, die Lichtstrahlen relativ großen Querschnitts zum Abtasten der Strichcodes liefern.

Ein hier besonders interessierendes technisches Gebiet, auf dem Strichcodes und Strichcode-Lesevorrichtungen eingesetzt werden, ist das Gebiet der optischen Speichermedien. Speziell bei optischen Speicherplatten, z.B. Videoplatten, CDs und dergleichen befindet sich auf der Platte konzentrisch bezüglich dem Plattenmittelpunkt ein Strichcode.

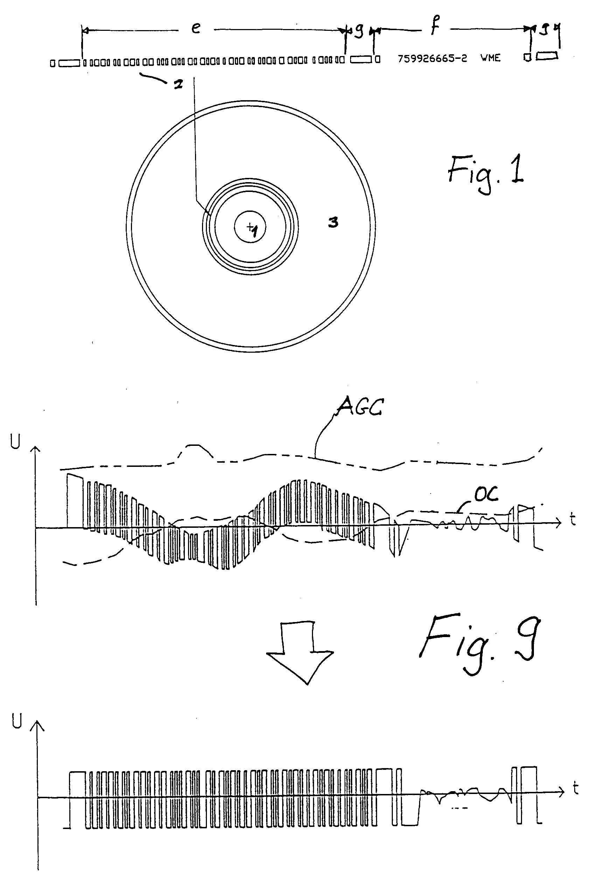

Fig. 1 zeigt eine Draufsicht auf eine optische Speicherplatte mit einem Mittelpunkt 1, einem in einer dazu konzentrischen Spur aufgezeichneten Strichcode 2 und eine außerhalb des Strichcodes 2 vorgesehenen Datenzone 3. Oberhalb der Platte ist der Strichcode 2 in vergrößerter, linearer Anordnung dargestellt. Der Strichcode 2 enthält in strichcodierter Form eine Identifikationsnummer als eigentlichen Strichcode e, einen Klarschriftabschnitt f und Synchronisationsfelder g, deren Zweck weiter unten noch erläutert wird.

Die eingangs erläuterten gewöhnlichen Strichcodes bestehen aus einer Aneinanderreihung breiter und schmaler Striche mit Zwischenabständen, wobei die Striche z.B. dunkel und die Zwischenabstände hell sind. Derartige Strichcode lassen sich mit den genannten Geräten lesen.

Bei einer optischen Speicherplatte sind die Strichcodes der in Fig. 1 gezeigten Art mit Hilfe eines Lasers eingeschrieben. Bekanntlich wird um Herstellen von optischen Speicherplatten zunächst eine sogenannte Master-Platte hergestellt. Die einzuschreibende Information wird in eine lichtempfindliche Schicht auf der Maser-Platte geschrieben. Hierzu wird ein fokussierter Laserstrahl verwendet, der eine sogenannte Halbwertsbreite von ca. 1 $\mu$m aufweist.

Dieser Laserstrahl wird auch zum Ausbilden der Strichcodes verwendet. Jeder einzelne dicke oder dünne Strich, der hier im folgenden auch als "Feld" bezeichnet wird, setzt sich zusammen aus einer Vielzahl von dünnen Spurelementen, die jeweils eine Breite von ca. 1 $\mu$m, eine Tiefe von 120 nm und einen radialen Abstand von 1,5 bis 4 $\mu$m besitzen.

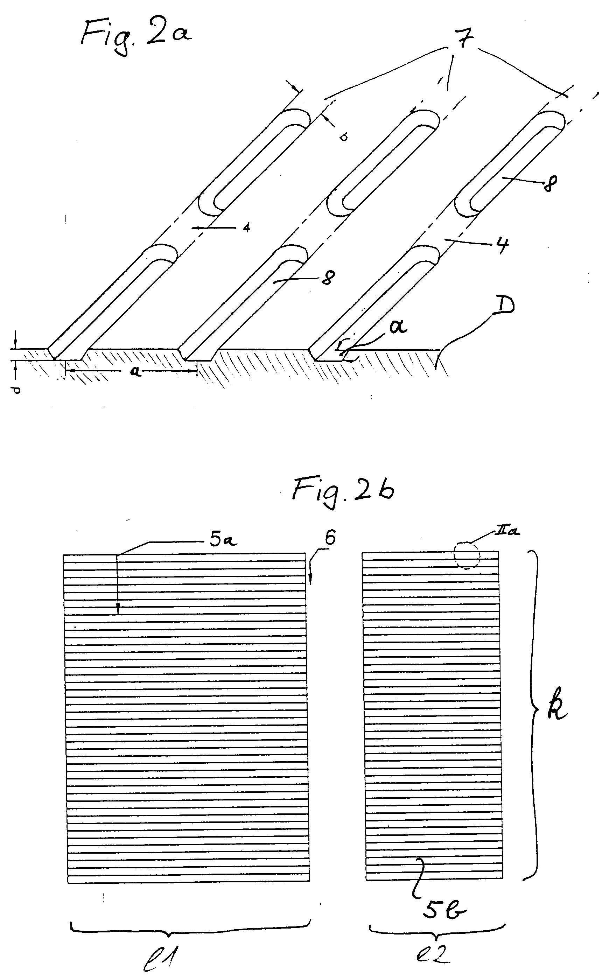

Fig. 2 zeigt schematisch die Ausbildung der einzelnen Felder und Zwischenabstände des oben in Fig. 1 dargestellten Strichcodes.

Gemäß Fig. 2B haben ein links dargestelltes breites Feld 5a einer (tangentialen) Länge $l_1$ und ein rechts dargestelltes schmales Feld 5b einer "tangentialen" Länge $l_2$ konstante Breite k, wobei zwischen den beiden Feldern 5a und 5b ein Zwischenraum 6 vorgesehen ist. Die Länge $l_1$ ist etwa das Doppelte der Länge $l_2$, der Zwischenraum 6 hat etwa die halbe Länge von $l_2$. Der oben in Fig. 1 dargestellte Strichcode enthält eine längere Folge derartiger Felder, wobei die Aufeinanderfolge der breiten und schmalen Felder und der Zwischenräume die codierte Information beinhaltet.

Jedes Feld 5 besteht aus einer Vielzahl von Spuren oder Spurelementen 7, wie sie in Fig. 2a dargestellt sind. Gemäß der in Fig. 2a gezeigten Schnittdarstellung durch eine optische Speicherplatte D sind parallel zueinander, d.h. konzentrisch zu einem hier nicht dargestellten Plattenmittelpunkt drei Spuren 7 dargestellt, die definiert werden durch längliche Vertiefungen 8, zwischen denen sich einzelne Lücken 4 befinden. Die Vertiefungen 8 können auch durchgehend ausgebildet sein.

Jede Vertiefung 8 besitzt eine Tiefe d von ca. 120 nm, und eine Breite b von ca. 1 $\mu$m. Benachbarte Spuren 7 haben einen Abstand a von 3 $\mu$m.

Rechts oben in Fig. 2b ist der in Fig. 2a dargestellte Ausschnitt durch IIa angedeutet.

Bei der Fertigung von optischen Speicherplatten werden die Strichcodes zur Überwachung des Produktionsvorganges gelesen. Speziell erfolgt das Erfassen der Strichcodes zur Abgrenzung verschiedener Chargen.

Die vorliegende Erfindung bezieht sich speziell auf die in oben beschriebener Weise ausgebildeten Strichcodes auf optischen Speicherplatten, also solche Strichcodes, die durch eine Vielzahl paralleler oder konzentrischer Spurelemente zusammengesetzt sind, wobei die einzelnen Spurelemente aus Vertiefungen bestehen.

Die Strichcodes auf den optischen Speicherplatten haben nur relativ schwachen optischen Kontrast (Feld-/Zwischenraum-Kontrast). Aus diesem Grund kommt die Anwendung herkömmlicher Lesegeräte der oben erläuterten Art nicht in Betracht.

Um die Strichcodes auf optischen Speicherplatten mit Kamerasystemen erfassen zu können, ist wegen des schwachen optischen Kontrastes eine aufwendige Beleuchtung erforderlich, um mit Hilfe diffusen Beleuchtungslichtes eine Kontrastverstärkung zu erreichen.

Der Einsatz von zeilenförmigen oder flächigen Kamerasystemen in Verbindung mit speziellen Beleuchtungsvorrichtungen ist aber dennoch nicht unproblematisch, weil nämlich durch Schwankungen der Spurbreiten in den Feldbereichen des Strichcodes erhebliche Kontrastschwankungen verursacht werden. Deshalb muß auch die Lesegeschwindigkeit beschränkt werden. Verschiedene Schichtdikken der optischen Speicherplatten sind ebenfalls Ursache für erhebliche Kontrastschwankungen.

Der Erfindung liegt die Aufgabe zugrunde, eine Vorrichtung zum Lesen von Strichcodes der eingangs genannten Art anzugeben, die vergleichsweise wenig anfällig gegenüber Kontrast- und Reflexionsschwankungen des zu lesenden Strichcodes ist, wobei die Vorrichtung dennoch relativ kostengünstig herstellbar sein soll.

Gelöst wird diese Aufgabe erfindungsgemäß durch eine Optik zum Formen eines Laserstrahls derart, daß etwa in der Ebene der Strichfelder seine Halbwertsbreite in der Größenordnung der Länge der Strichfelder liegt, und eine mechanische Führungsanordnung, die den Lichtstrahl relativ zu dem Strichcode bewegt, wobei die Optik derart ausgebildet ist, daß von dem Strichcode direkt reflektiertes Licht und/oder ein Teil der durch Beugung an der Gitterstruktur der Strichfelder erzeugten Nebenmaxima auf einen Lichtdetektor gelangt.

Die Größenordnung bedeutet hier speziell einen Bereich von ca. einem Drittel bis das Zweifache.

Erfindungsgemäß wird die Optik im wesentlichen senkrecht über den zu lesenden Strichcode geführt. Jedes aus einer Vielzahl einzelner dünner Längslinien zusammengesetztes Feld wirkt als Beugungsgitter. Vorzugsweise ist die Optik derart in Bezug auf die Ebene des zu lesenden Strichcodes angeordnet, daß in der Empfangsebene des von dem Strichcode reflektierten oder durch den Strichcode hindurchgelaufenen Lichtstrahles eine maximale Interferenz zwischen dem Hauptmaximum der Strahlung und den Nebenmaxima auftritt.

Trifft der zweckmäßigerweise über eine Lichtleitfaser auf die Strichcode-Zone geführte Laserstrahl auf eine blanke, spiegelnde Fläche, so wird praktisch die gesamte Strahlung reflektiert, und der das reflektierte Licht empfangende Detektor liefert ein elektrisches Signal maximaler Amplitude.

Trifft der lesende Lichtstrahl auf ein durch viele dünne Linien gebildetes Feld, so bedingt die mikroskopische Gitterstruktur des Feldes eine Beugung und Streuung des Lichtes. In einer speziellen Variante ist erfindungsgemäß dafür gesorgt, daß durch die spezielle Art der Fokussierung des Laserstrahles sowohl der direkt reflektierte Lichtstrahl als auch Beugungslicht empfangen werden.

Bei den üblichen optischen Speicherplatten sind die geometrischen Abmessungen der Datenspuren so gewählt, daß sich in der Laufwerkoptik für eine solche Platte eine Phasenverschiebung zwischen den direkt reflektierten Lichtstrahl bzw. dem Hauptmaximum des durch die Beugung entstehenden Lichtmusters einerseits und den Nebenmaxima des Lichtmusters andererseits eine Phasenverschiebung von 180° vorliegt. Hierdurch erhält man maximale Interferenz. Diese besondere Eigenschaft wird von der vorliegenden Erfindung ausgenutzt.

In einer anderen Variante wird nur ein oder werden nur einige Nebenmaxima - ohne den direkt reflektierten Lichtstrahl erfaßt, z.B. mit einer schräg zur optischen Achse des Abtastlichtstrahls unter einem geeigneten Winkel angeordneten Lichtdetektor.

Die Erfindung ist anwendbar insbesondere bei den oben beschriebenen, in Form einer Kreisbahn ausgebildeten Strichcodes auf optischen Speicherplatten, wobei die einzelnen Felder des Codes aus einer Vielzahl von dünnen Linien bestehen. Die Erfindung ist aber außerdem anwendbar bei linearen Codes, sofern die Striche bzw. Felder der Codes sich jeweils aus einer Vielzahl dünner Linien zusammensetzen.

Die Länge der Strichfelder wird in Tangentialrichtung, die Breite in Radialrichtung gemessen, wobei die dünnen Strichfelder etwa halb so breit sind wie die dicken Strichfelder.

In einer speziellen gerätetechnischen Ausführungsform der Erfindung ist vorgesehen, daß eine ortsfeste Lichtstrahlführung vorgesehen ist, an deren einem Ende eine Lichtquelle, z.B. eine Leuchtdiode, vorzugsweise eine Laserdiode, und ein Lichtdetektor, z. B. ein Fototransistor angeordnet sind, daß eine über den Strichcode, mit der ortsfesten Lichtstrahlführung optisch gekoppelte, bewegliche Lichtstrahlführung vorgesehen ist, wobei letztere eine dem Strichcode mit Abstand gegenüberliegende Auskoppel/Einkoppeloptik aufweist. Diese Ausgestaltung stellt eine relativ einfache mechanische Lösung zum zuverlässigen Erfassen der Strichcodes dar. Die bewegliche Lichtstrahlführung kann z.B. als Lichtleitfaser in einer Fassung ausgebildet sein, wobei die Fassung von einem Antriebsmotor um eine mit der Drehachse der optischen Speicherplatte zusammenfallende Drehachse gedreht wird. Alternativ kann auch bei stillstehender Optik die Platte gedreht werden.

Das von dem Strichcode reflektierte Licht fällt in üblicher Weise auf einen Detektor und wird in ein elektrisches Signal umgesetzt, welches von einer vorzugsweise digitalen Auswerteelektronik verarbeitet wird.

Auch in diesem Bereich schafft die Erfindung spezielle Maßnahmen, mit deren Hilfe ein von Störungen kaum abträglich beeinflußtes Nutzsignal gewonnen werden kann.

Nachdem das optische Signal in ein elektrisches Signal umgesetzt ist, leitet eine Regelschaltung aus dem elektrischen Signal ein Leistungsregelsignal ab, auf dessen Grundlage die Intensität des Abtastlichtstrahles und mithin die Amplitude des aus dem von dem Strichcode kommenden Lichtstrahl gewonnenen Lasersignals konstant gehalten wird.

Bekanntlich stellt das Lesesignal ein durch die Kontrastunterschiede des Strichcodes moduliertes Signal dar, welches durch verschiedene Einflüsse, beispielsweise durch externes Streulicht und dergleichen, Amplitudenschwankungen unterworfen ist. Durch die erfindungsgemäße Maßnahme wird nun ein Leistungsregelsignal gewonnen, mit dem die Intensität des Abtastlichtstrahles geregelt wird. Dadurch erhält man ein moduliertes Signal mit konstanten Amplitudenwerten.

Ferner sieht die Erfindung vor, daß die Regelschaltung auf dem elektrischen Signal ein Offset-Regelsignal ableitet, mit welchem der Mittelwert des Detektorsignals konstant gehalten wird. Beim Abtasten eines Strichcodes von einer optischen Speicherplatte wird durch die Relativgeschwindigkeit zwischen Abtaststrahl und Strichcode ein Überlagerungssignal erzeugt, dessen Frequenz der Relativ-Drehzahl entspricht. Durch das Offset-Regelsignal können diese Störungen beseitigt werden, und man erhält ein moduliertes Signal mit konstanter Amplitude und konstantem Mittelwert.

Während das Leistungsregelsignal den Zweck hat, Amplitudenschwankungen auszugleichen, die beispielweise verursacht werden durch schwankendes Reflexionsvermögen der abgetasteten Oberfläche der Speicherplatte und dergleichen, ist zur Eliminierung von beispielsweise durch unterschiedlich starkes Streulicht hervorgerufenen Störspannungen ein Lock-in-Verstärker vorgesehen, wie es an sich bekannt ist.

Im folgenden werden Ausführungsbeispiele der Erfindung anhand der Zeichnung näher erläutert. Es zeigt:

Fig. 1
eine Draufsicht auf eine optische Speicherplatte, wobei der auf der Speicherplatte befindliche Strichcode oberhalb der Platte in linearer, vergrößerter Darstellung veranschaulicht ist.

Fig. 2
Einzelheiten des Strichcodes, und zwar Fig. 2a die Struktur einzelner Spuren, und Fig. 2b zwei durch einen Zwischenraum getrennte Felder, die sich jeweils aus einer Vielzahl von Spuren der in Fig. 2a dargestellten Art zusammensetzen;

Fig. 3a
eine Prinzip-Skizze einer Vorrichtung zum Lesen von Strichcodes von einer optischen Speicherplatte,

Fig. 3b
eine grafische Darstellung zur Erläuterung des Begriffs "Halbwertsbreite";

Fig. 4
eine schematisierte Darstellung einer mechanischen Anordnung einer Vorrichtung zum Lesen von Strichcodes von einer optischen Speicherplatte,

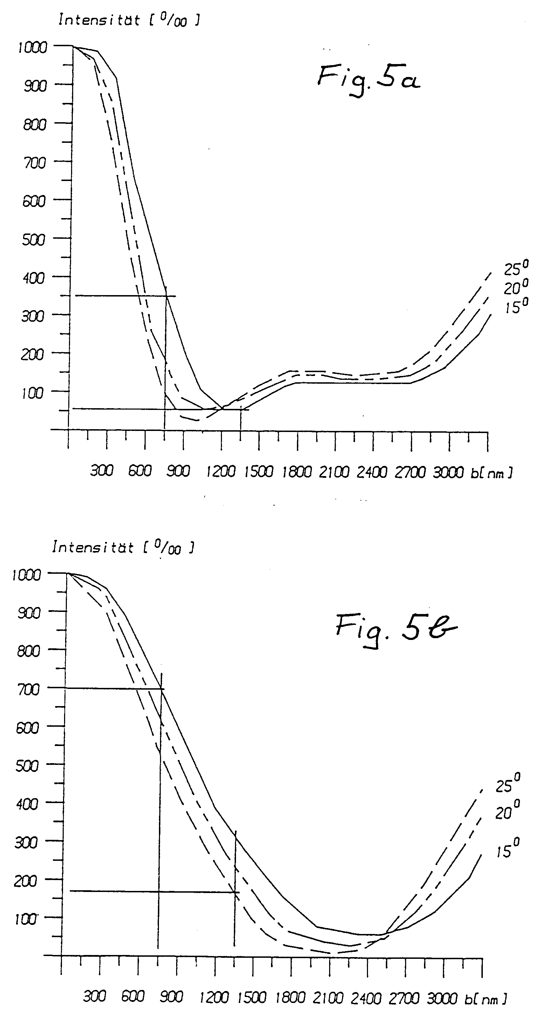

Fig. 5a und 5b
jeweils die Intensitätsverteilung eines von einem Strichcode reflektierten Lichtstrahles in Abhängigkeit von der Breite einzelner Linien eines Strichcode-Feldes, wobei Fig. 5a die Intensitätsverteilung für direkt reflektiertes Licht und Streulicht, und Fig. 5b die Intensitätsverteilung lediglich für direkt reflektiertes Licht angibt;

Fig. 6
ein Blockschaltbild eines Sende/Empfangsmoduls der Code-Lesevorrichtung;

Fig. 7
ein Blockschaltbild einer Auswerteelektronik,

Fig. 8
ein funktionelles Blockschaltbild, welches die Auswertung des modulierten Lichtstrahles veranschaulicht und

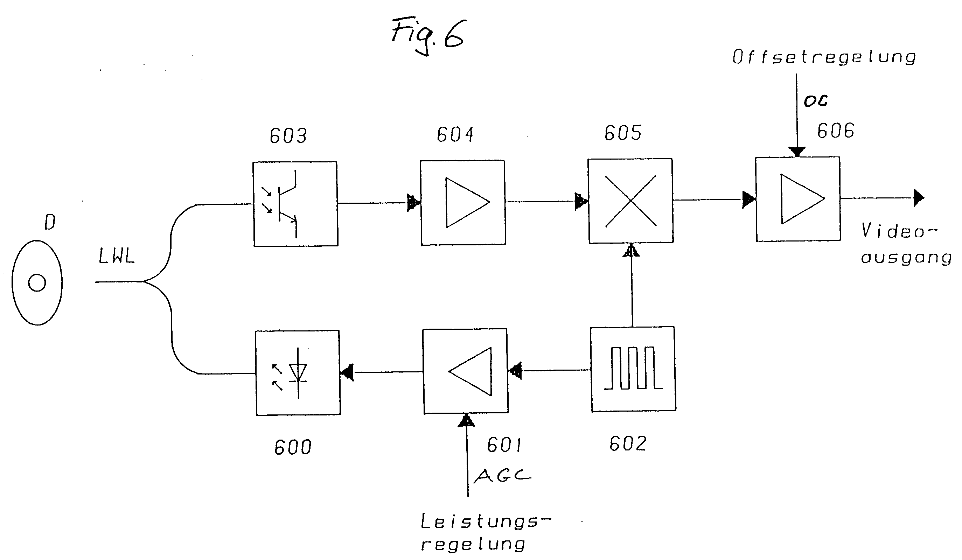

Fig. 9
den Verlauf eines elektrischen, von dem gelesenen Strichcode modulierten Signals vor bzw. nach der Verarbeitung durch die in Fig. 6 dargestellte Schaltung.

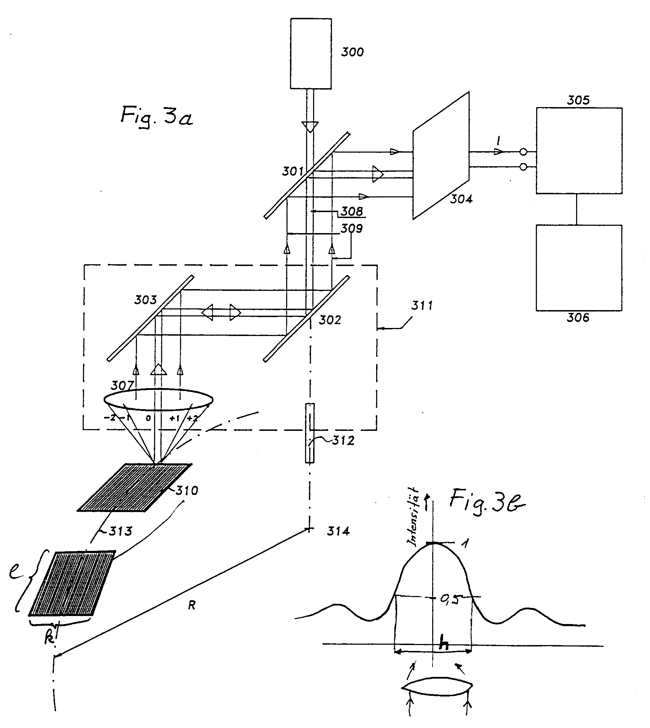

Mit der in Fig. 3a schematisch dargestellten Anordnung wird ein auf einer optischen Speicherplatte geschriebener Strichcode gelesen, der in der oben erläuterten Weise durch mehrere Spurelemente zusammengesetzt ist. Die Felder der Breite k erstrekken sich entlang einer links in Fig. 3a dargestellten Symmetrielinie 313, die von dem Mittelpunkt der Speicherplatte einen Abstand R aufweist. Relativ zu der ruhenden Speicherplatte bewegt sich auf einer Drehachse 312, die mit dem Drehmittelpunkt 314 der optischen Platte zusammenfällt, eine als Block 311 dargestellte Ablenk- und Stahlformereinheit. Der Block 311 enthält einen ersten Umlenkspiegel 302, einen zweiten Umlenkspiegel 303 und ein Objektiv 307.

Von einem Laser 300 wird ein Laserstrahl über einen Strahlverzweiger 301 auf den Umlenkspiegel 302 gelenkt und gelangt von dort über einen zweiten Umlenkspiegel 303 und das Objektiv 307 auf das Feld 310 des zu lesenden Strichcodes.

Das Objektiv 307 formt den Laserstrahl derart, daß die Halbwertsbreite der Lichtverteilung in der Ebene des bestrahlten Feldes 310 etwa so groß ist wie die Länge $l_2$ oder $l_1$ (vorzugsweise $l_2$), und auch wie die Breite k des Feldes 310, wobei die Längen l bzw. $l_1$, $l_2$ in Längs- oder Tangentialrichtung und die Breite k quer zur Richtung der Symmetrielinie 313 gemessen wird.

Bedingt durch die mikroskopische Gitterstruktur des Feldes 310 (dieses Feld 310 entspricht dem in Fig. 2b dargestellten Feld 5a oder 5b) wird der auftreffende Laserstrahl derart reflektiert, daß die Intensitätsverteilung des reflektierten Lichtes derjenigen am Beugungsgitter entspricht. In Fig. 3a sind das Hauptmaximum und zwei Nebenmaxima-Paare angedeutet. Das Objektiv 307 erfaßt außer dem Hauptmaximum, d.h. den direkt reflektierten Lichtstrahl noch zwei Strahlanteile erster und zweiter Ordnung (+1, -1, +2, -2). Die rücklaufenden Strahlanteile 309 gelangen über die Spiegel 303 und 302 und den Strahlverzweiger 301 auf einen lichtempfindlichen Detektor, der das Licht, welches von dem Strichcode moduliert ist, in einen Strom I umsetzt. Dieser Strom wird von einer Auswerteeinheit 305 ausgewertet, und die der codierten Information entsprechenden Zeichen werden auf einer Anzeigevorrichtung 306 dargestellt.

Wie oben angegeben, erfolgt die Fokussierung des Lichtstrahles durch das Objektiv 307 derart, daß die Halbwertsbreite des Lichtstrahles in der Ebene des Feldes 310 größenordnungsmäßig dessen Breite und Länge entspricht.

Fig. 3b zeigt die Intensitätsverteilung eines Lichtstrahles in der Ebene des Strichcodes. In der Mitte des Lichtflecks herrscht die größte Intensität, die hier den normierten Wert 1 hat. Dort, wo die Intensität der Hälfte des normierten Werts 1 entspricht, läßt sich eine "Halbwertsbreite" h angeben. Diese Halbwertsbreite h ist etwa so groß wie die Länge $l_2$ der kürzeren Strichcode-Felder 310, aber hier auch etwa so groß wie die Länge $l_1$ der größeren Strichcodefelder und auch etwa so groß wie die Breite k. Damit gilt speziell

$$1/3 l_2 \leq h \leq 2 * l_2$$

$$2/3 l_1 \leq h \leq l_1$$

$$1/3 k \leq h \leq 2 * k$$

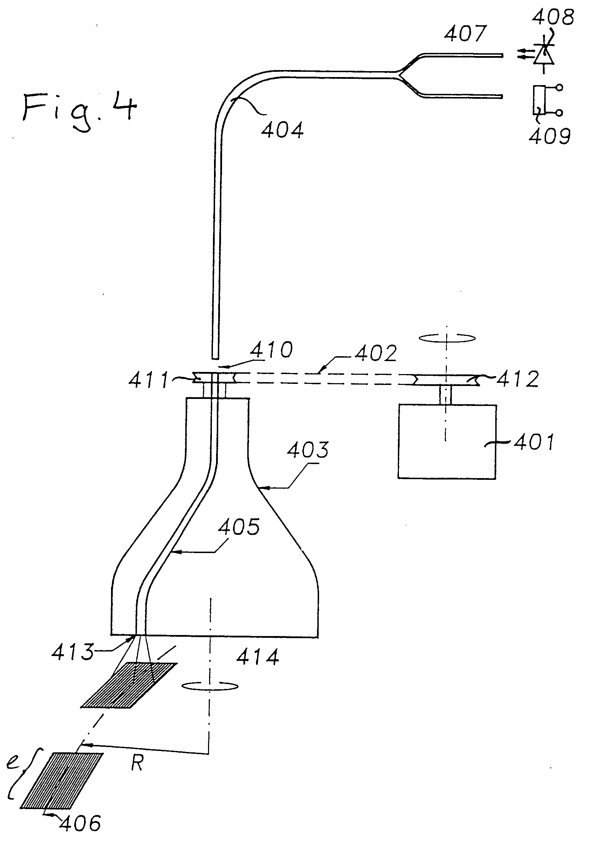

Fig. 4 zeigt schematisch eine mechanische Ausführungsform, die teilweise mit der schematischen Anordnung nach Fig. 3 übereinstimmt.

+Eine Leuchtdiode 408 gibt auf ein Einkoppelende einer Lichtleitfaser 404 einen Lichtstrahl der von der Lichtleitfaser 404 über eine Koppelzone 410 in eine sich drehende Lichtleitfaser 405 eingekoppelt wird. Das der Koppelzone 410 abgewandte Ende der sich drehenden Lichtleitfaser 405 ist als Auskoppelende oder Optik 413 ausgebildet, so daß der austretende Lichtstrahl in der anhand von Fig. 3 beschriebenen Weise auf die einzelnen Felder des zu lesenden Strichcodes fällt. Der Strichcode erstreckt sich entlang einer Symmetrielinie 406, die von dem Mittelpunkt der ruhenden optischen Speicherplatte einen Abstand R aufweist.

Die Lichtleitfaser 405 befindet sich in einem Träger 403, der um eine Achse 414 drehbar ist, die mit dem Mittelpunkt der ruhenden optischen Speicherplatte zusammenfällt. Die Lichtleitfaser 404 und das obere Ende der Lichtleitfaser 405 fallen zumindest im Bereich der Koppelzone 410 ebenfalls mit der Drehachse 414 des Trägers 413 zusammen, so daß eine stetige Lichtkopplung erfolgt.

Oben an dem Träger 403 befindet sich eine Riemenscheibe 411, die über einen Keilriemen 402 von einem Motor 401 angetrieben wird, auf dessen Ausgangswelle eine weitere Riemenscheibe 412 sitzt.

Das von dem Feld des Strichcodes über die Optik 413 in die bewegte Lichtleitfaser 405 zurückgekoppelte Licht gelangt über die ortsfeste Lichtleitfaser 404 und einen Teiler 411 auf einen als Fototransistor 409 ausgebildeten Detektor.

Bevor im folgenden Einzelheiten der Auswerteelektronik erläutert werden, soll in Verbindung mit Fig. 5a und 5b der besondere erfindungsgemäße Effekt erläutert werden.

Wie in Fig. 2a angedeutet ist, haben die einzelnen Vertiefungen 8 eine Tiefe d von 120 nm und bilden mit der Oberfläche der optischen Speicherplatte D einen Winkel $\alpha$. Dieser Winkel $\alpha$, hier auch als Flankenwinkel bezeichnet, ist abhängig von dem Material und der Herstellung der optischen Speicherplatte mehr oder weniger steil und hat im allgemeinen einen Wert zwischen 15° und 25°.

In Fig. 5a ist auf der Abszisse die Breite b der einzelnen Vertiefungen aufgetragen. Auf der Ordinate ist die Intensität des reflektierten Lichtes dargestellt. Bei blanker Oberfläche wird die gesamte Strahlung reflektiert, die Intensität ist am höchsten (1000 °/oo). Die typischen Breiten d der die einzelnen Spuren 7 bildenden Vertiefungen 8 liegen zwischen 750 und 1350 nm. Wie man aus Fig. 5a erkennt, nimmt die Intensität mit zunehmender Breite b der Vertiefungen der einzelnen Spuren ab. In Fig. 5a ist mit dem Flankenwinkel $\alpha$ als Parameter ($\alpha$ = 15°; 20°; 25°) die Intensitätsverteilung für den Fall dargestellt, daß der direkt reflektierte Strahl (der Strahlanteil nullter Ordnung in Fig. 3) sowie die diffusen Strahlungsanteile berücksichtigt sind.

Zum Vergleich ist in Fig. 5b der Fall dargestellt, daß lediglich der direkte Strahlungsanteil berücksichtigt ist. Man erkennt, daß die Empfindlichkeit gemäß Fig. 5a weniger stark von dem Flankenwinkel $\alpha$ abhängt als in dem Fall nach Fig. 5b. Außerdem ist der Intensitätsabfall in Fig. 5a wesentlich schärfer als in Fig. 5b. Daraus folgt, daß die Berücksichtigung sowohl des direkten Strahlungsanteiles als auch der Streulichtanteile zu bevorzugen ist und Auswertungsergebnisse liefert, die im wesentlichen unabhängig sind von Schwankungen der Breite der Vertiefungen 8 der einzelnen Spuren oder Spurelemente 7.

Gemäß der in Fig. 6 schematisch dargestellten Schaltung wird von einer Leuchtdiode oder Laserdiode 600 Licht über einen Lichtwellenleiter Lwl auf die Oberfläche der optischen Speicherplatte D geleitet. Das dort reflektierte Licht gelangt über den Lichtwellenleiter Lwl auf einen Fototransistor 603, dessen elektrisches Ausgangssignal von einem Verstärker 604 verstärkt und dann auf einen Multiplizierer 605 gegeben wird. Ein Oszillator 602 gibt Taktsignale sowohl an den Multiplizierer 605 als auch an den Sendeverstärker 601. Damit gibt die Diode 600 gepulstes Licht in den Lichtwellenleiter Lwl. Der Multiplizierer 605 multipliziert das von dem zu lesenden Strichcode modulierte Signal mit dem von den Taktgeber 602 gelieferte Taktsignal. Durch diesen Lock-in-Verstärker werden Störsignale, die z. B. durch Streulicht verursacht werden, ausgeschaltet.

Die Leistungsregelung des Sendeverstärkers 601 erfolgt mittels eines AGC-Signals. Dadurch lassen sich Alterungserscheinungen der Diode und dergleichen kompensieren.

Das Ausgangssignal des Multiplizierers 605 gelangt auf eine Verstärkerstufe 606, die ein Video-Ausgangssignal liefert. Die Verstärkerstufe 606 wird von einem Offset-Regelsignal OC geregelt. Wie oben erwähnt, entsteht durch die Relativdrehung zwischen dem abtastenden Lichtstrahl und der optischen Speicherplatte ein Signal mit einer der Relativdrehzahl entsprechenden Frequenz. Durch das Offset-Regelsignal läßt sich dieses Störsignal eliminieren.

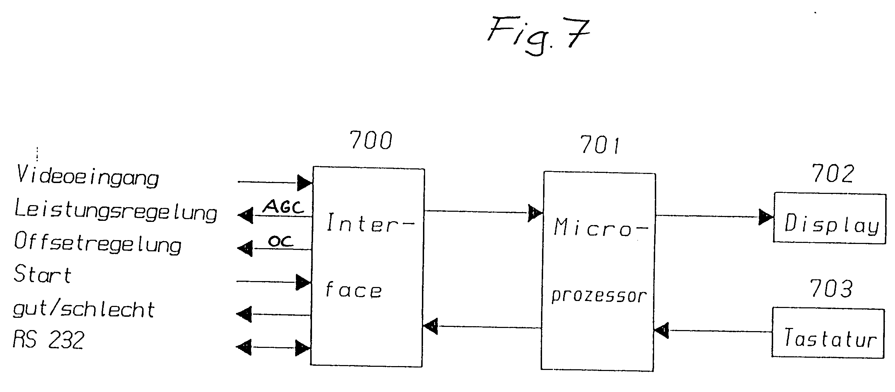

Fig. 7 zeigt anhand eines Blockdiagramms die wesentlichen Bestandteile der Auswerteelektronik. Das oben erwähnte Videosignal gelangt von der Verstärkerstufe 606 an eine Schnittstelle (Interface) 700. Aus diesem Signal werden die beiden oben erwähnten Regelsignale AGC und OC abgeleitet. Das Interface 700 empfängt ein Startsignal für den Betriebsbeginn und liefert bei Bedarf ein Signal "Gut/Schlecht" für die Produktionsüberwachung.

An das Interface 700 ist ein Mikroprozessor 701 angeschlossen, der Signale von einer Tastatur 703 empfängt und Anzeigesignale an eine Anzeigevorrichtung (Display) 702 liefert.

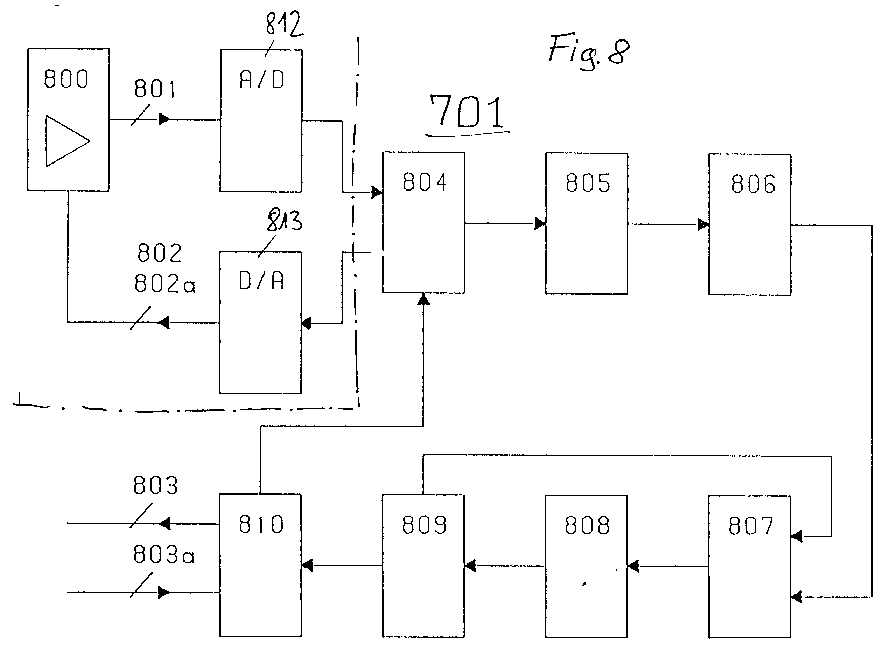

Fig. 8 zeigt anhand eines funktionellen Blockschaltbildes die Verarbeitungs und Auswertung der Signale. Ein links in Fig. 6 näher dargestelltes, hier in Blockform skizziertes Sende-Empfangsmodul 800 liefert ein aus dem modulierten Lichtsignal gewonnenes elektrisches Signal 801, welches von einem A/D-Wandler 812 in ein digitales Signal umgesetzt wird. Die rechts und unten in Fig. 8 dargestellten Elemente werden durch den Mikroprozessor 701 realisiert. Ein Block 804 empfängt von dem A/D-Wandler 812 die digitalisierten Signale, speichert die empfangenen Signale und generiert Taktsignale für den A/D-Wandler 812 sowie den D/A-Wandler 813, der an das Modul 800 Analogsignale 802 und 802a liefert. Diese beiden Signale entsprechen dem AGC- bzw. dem OC-Signal für die Leistungsregelung bzw. die Offset-Regelung (vgl. Fig. 6). Diese Regelsignale werden von dem Element 804 aus dem digitalisierten Videosignal generiert.

Der Block 805 ist ein Datenverarbeitungsblock, dessen Aufgabe darin besteht, aus den digitalisierten Daten die oben in Fig. 1 dargestellten Synchronisationsfelder g herauszusuchen. In der Praxis steht zum Erfassen des Strichcodes auf einer optischen Speicherplatte häufig nur etwas mehr als eine Umdrehung zur Verfügung. Wenn der Suchvorgang also mitten in dem Strichcodeabschnitt e) in Fig. 1 beginnt und an dieser Stelle wieder endet, wird der an sich durchgehende Strichcode zerstückelt. Aufgabe des Blocks 805 ist es, die Synchronisationsfelder G zu finden, anhand derer dann ein Muster nachgebildet wird. Mit diesen Musterdaten werden in dem nachfolgenden Block 806 die Bestandteile des Strichcodes lokalisiert.

In dem nachfolgenden Block 807 erfolgt eine Aufbereitung der Strichcode-Daten für die nachfolgende Decodierung. In diesem Block werden auch eventuelle Drehzahlschwankungen zwischen dem Abtastsystem und der optischen Speicherplatte berücksichtigt.

In dem Block 808 erfolgt die eigentliche Dekodierung des Strichcodes abhängig von den Längen der Felder und der Zwischenräume und deren Aufeinanderfolge.

Aus dem Strichcode werden die zugehörigen ASCii-Zeichen ermittelt.

Dem Block 808 nachgeschaltet ist ein Prüf- und Korrekturblock 809. In diesem Block erfolgt eine Gültigkeitsprüfung, gegebenenfalls noch eine Fehlerkorrektur. Der Datenaustausch mit den nachgeordneten Einrichtungen erfolgt über einen Block 810. Es werden Digitalsignale 803 und 803a mit dem Block 810 ausgetauscht. Die Daten 803 gehen zu einer Anzeige, z.B. der in Fig. 7 dargestellten Anzeige (Display) 702. Von der Tastatur 703 werden Daten 803a empfangen.

**Patentansprüche**

1. Vorrichtung zum Lesen von auf optischen Speichern befindlichen Strichcodes, mit einer optischen Abtasteinrichtung, wobei die Strichcodes unterschiedlich lange Strichfelder (5, 310) konstanter Breite (k) aufweisen, die sich jeweils aus einer Vielzahl dünner Längslinien (7, 8, 4) zusammensetzen, wozu die Strichcodes mittels lasertechnischer Verfahren auf die optischen Speicher aufgezeichnet wurden, und insbesondere die Strichfelder sich aus parallel bzw. konzentrischen Spurelementen (7, 8) zusammensetzen, die jeweils eine in Grenzen konstante Breite (b) und konstanten Abstand (a) voneinander aufweisen,
   **gekennzeichnet durch,**
   eine Optik (307, 413) zum Formen eines Lichtstrahls derart, daß etwa in der Ebene der Strichfelder (5, 310) seine Halbwertsbreite (h) in der Größenordnung der Länge (1, $1_2$, $1_1$) der Strichfelder liegt, und eine mechanische Führungsanordnung (403), die den Lichtstrahl (308) relativ zu dem Strichcode bewegt, wobei die Optik derart ausgebildet ist, daß von dem Strichcode direkt reflektiertes Licht und/oder ein Teil der durch Beugung an der Gitterstruktur der Strichfelder erzeugten Nebenmaxima auf einen Lichtdetektor (304; 409; 603) gelangt.

2. Vorrichtung nach Anspruch 1,
   **gekennzeichnet** durch
   einen Laser (300), der den Abtast-Lichtstrahl liefert.

3. Vorrichtung nach einem der Ansprüche 1 oder 2,
   **dadurch gekennzeichnet,**
   daß eine ortsfeste Lichtstrahlführung (404) vorgesehen ist, an deren einem Ende eine Lichtquelle (408) und ein Lichtdetektor (409) angeordnet sind, daß eine über den Strichcode bewegte, mit der ortsfesten Lichtstrahlführung (404) optisch gekoppelte bewegliche Lichtstrahlführung (405) vorgesehen ist, wobei letztere eine dem Strichcode mit Abstand gegenüberliegende Auskoppel/Einkoppel-Optik (413) aufweist.

4. Vorrichtung nach einem der Ansprüche 1 bis 3,
   **gekennzeichnet** durch
   eine Signalverarbeitungsschaltung (600, 606), die das von dem Strichcode kommende Licht in elektrische Signale umsetzt.

5. Vorrichtung nach Anspruch 4,
   **gekennzeichnet** durch

eine Regelschaltung (701), die aus dem elektrischen Signal ein Leistungsregelsignal (AGC) ableitet, auf dessen Grundlage die Intensität des Abtast-Lichtstrahles und mithin die Amplitude des aus dem von dem Strichcode kommenden Lichtstrahl gewonnenen Lesesignals konstant gehalten wird.

6. Vorrichtung nach Anspruch 5,
   **dadurch gekennzeichnet,**
   daß die Regelschaltung (701) aus dem elektrischen Signal ein Offset-Regelsignal (OC) ableitet, mit welchem der Mittelwert des Detektorsignals konstant gehalten wird.

7. Vorrichtung nach einem der Ansprüche 1 bis 6, in Verbindung mit einem mit Synchronisationsfeldern versehenen Strichcode,
   **gekennzeichnet** durch
   eine Auswerteeinheit (701, 805-810) mit einem Speicher, in welchem Daten bezüglich der Synchronisationsfelder und des Strichcodes gespeichert werden, und mit einer Auswerteschaltung (810), die die gespeicherten Daten auswertet, um einen zusammenhängenden Strichcode zu ermitteln.

8. Vorrichtung nach einem der Ansprüche 1 bis 7,
   **dadurch gekennzeichnet,**
   daß die Halbwertsbreite (h) in der Größenordnung der Länge ($l_2$) der kürzeren Strichfelder liegt.

9. Vorrichtung nach einem der Ansprüche 1 bis 8,
   **dadurch gekennzeichnet,**
   daß die Halbwertsbreite (h) in der Größenordnung der Breite (k) der Strichfelder liegt.

10. Vorrichtung nach einem der Ansprüche 1 bis 9,
    **dadurch gekennzeichnet,**
    daß die "Größenordnung" einem Bereich zwischen einem Drittel und dem Zweifachen entspricht.

e ⟶ g ⟵ f ⟶ 5

759926665-2  WME

2

Fig. 1

3

+1

AGC

U

OC

t

Fig. 9

U

t

Fig. 2a

Fig. 2b

Fig. 3a

Fig. 3ℓ

# Fig.4

Intensität [ $^0/_{00}$ ]

Fig. 5a

25⁰
20⁰
15⁰

300  600  900  1200  1500  1800  2100  2400  2700  3000  b[nm]

Intensität [ $^0/_{00}$ ]

Fig. 5b

25⁰
20⁰
15⁰

300  600  900  1200  1500  1800  2100  2400  2700  3000  b[nm]

12

Fig. 6

**Fig. 7**

Interface block (700): Inter-face

Microprocessor block (701): Micro-prozessor

Display (702)

Tastatur (703)

Inputs to Interface (700):
- Videoeingang
- Leistungsregelung (AGC)
- Offsetregelung (OC)
- Start
- gut/schlecht
- RS 232

Fig. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | PATENT ABSTRACTS OF JAPAN vol. 8, no. 82 (P-268)14. April 1984 & JP-A-59 000 125 ( HITACHI SEISAKUSHO KK ) 5. Januar 1984 * Zusammenfassung * --- | 1,2,8 | G06K7/14 G06K7/10 |
| Y | US-A-4 672 600 (BALSTON,N.K. ET AL) * das ganze Dokument * --- | 1,2,8 | |
| A | FR-A-2 531 793 (SOPROGA S.A.R.L.) * das ganze Dokument * --- | 3 | |
| A | FR-A-2 163 481 (BENDIX CORP.) * das ganze Dokument * --- | 4,5 | |
| A | US-A-4 147 295 (NOJIRI,T.K. ET AL) * das ganze Dokument * --- | 4-6 | |
| A | US-A-4 292 511 (HEYMAN,P.M. ET AL) * das ganze Dokument * ----- | 7 | |

RECHERCHIERTE SACHGEBIETE (Int. Cl.5 )

G06K

Der vorliegende Recherchenbericht wurde für alle Patentansprüche erstellt

| Recherchenort | Abschlußdatum der Recherche | Prüfer |
|---|---|---|
| DEN HAAG | 06 OKTOBER 1993 | HERSKOVIC M. |